# EUROPÄISCHE PATENTSCHRIFT

(11) **EP 2 107 978 B1**
(45) Veröffentlichungstag und Bekanntmachung des Hinweises auf die Patenterteilung: **20.04.2016**
(21) Anmeldenummer: 07857057.9
(22) Anmeldetag: 21.12.2007
(51) Int. Cl.: B60N 2/24, B60N 2/56

(54) **FAHRZEUGSITZ MIT BELÜFTUNGSVORRICHTUNG ZUR BELÜFTUNG DES FONDBEREICHS EINES FAHRZEUGES**
VEHICLE SEAT WITH A VENTILATION DEVICE FOR VENTILATING THE REAR REGION OF A VEHICLE
SIÈGE DE VÉHICULE AVEC DISPOSITIF DE VENTILATION POUR VENTILER LA RÉGION ARRIÈRE D'UN VÉHICULE

(30) Priorität: 08.01.2007 DE 102007002001
(43) Veröffentlichungstag der Anmeldung: 14.10.2009
(73) Patentinhaber: Johnson Controls GmbH, 51399 Burscheid (DE)
(72) Erfinder: PELLENZ, Wolfgang, 53340 Meckenheim (DE); NDAGIJIMANA, Robin, 41469 Neuss (DE)
(74) Vertreter: Wolff, Felix
(86) Internationale Anmeldenummer: PCT/EP2007/011343
(87) Internationale Veröffentlichungsnummer: WO 2008/083833

(56) Entgegenhaltungen:
- EP-A- 0 217 752
- WO-A-97/09908
- DE-A1- 10 039 676
- DE-A1- 19 846 090
- DE-A1-102005 019 616
- DE-B3- 10 319 148

## Beschreibung

Die vorliegende Erfindung betrifft einen Fahrzeugsitz mit einer Rückenlehne und einer Belüftungsvorrichtung, wobei die Belüftungsvorrichtung zur Belüftung eines Fahrzeug-Fondraums vorgesehen ist und mindestens ein Gebläse und eine Luftaustrittsöffnung aufweist.

Solche Fahrzeugsitze sind allgemein bekannt. So beschreibt die europäische Patentschrift EP 0217752 beispielsweise eine Klimatisierungsvorrichtung in der Rückseite eines Vordersitzes mit einem elektrischen Ventilator. Die Klimatisierungsvorrichtung wird bevorzugt in die Kopfstütze des Fahrzeugsitzes eingebaut und ist mit Verstellflügeln, wie sie auch bei Autoklimaanlagen verwendet werden, ausgestattet. Nachteilig ist, dass Luft entweder von unterhalb der Kopfstütze angesaugt wird oder aus dem Fondbereich. Durch die Ansaugung unterhalb der Kopfstütze entsteht insbesondere für den Insassen auf dem Vordersitz ein sehr unangenehmer Luftstrom, der zum Beispiel zu einer schmerzhaften Verspannung der Nackenmuskulatur führen kann. Die Druckschrift FR 2 845 318 offenbart eine Klimatisierungsvorrichtung zur Belüftung des Fondraums, wobei sich eine Lufteinlassöffnung am Sitzteil des Fahrzeugsitzes befinden kann. Hierbei ist nachteilig, dass ein Luftzufuhrkanal von dem Sitzteil des Fahrzeugsitzes bis zur Rückenlehne des Fahrzeugsitzes reichen muss, wenn die Belüftung des Fondraums über eine Rückenlehne oder eine Kopfstütze erfolgen soll. Die Herstellung eines solchen Luftzufuhrkanals mit einer Biegung ist dabei besonders aufwändig, wodurch auch die Herstellung eines Fahrzeugsitzes sehr aufwändig wird. Wird auf die Biegung verzichtet und das Sitzteil und die Rückenlehne weisen einzelne Teile des Luftzufuhrkanals auf, so wird bereits bei einer leichten Verschiebung des Sitzteils gegenüber der Rückenlehne die Belüftung des Fondraums gestört, da Luft zwischen dem Sitzteil und der Rückenlehne austreten kann. Weiterhin besteht bei der Verwendung eines Luftzufuhrkanals die Gefahr, dass sich der Durchmesser des Kanals an einer oder mehrere Stellen verengt, weil ein Insasse, der auf dem Fahrtzeugsitz sitzt, mit seinem Gewicht den Luftzufuhrkanal eindrückt. Auch hierbei würde eine Versorgung des Fondbereichs mit Luft wesentlich gestört. Des weiteren muss die Luft über einen langen Weg transportiert werden, wodurch die Ansaugkraft eines Gebläses sehr groß sein muss. Ein solches saugstarkes Gebläse ist in der Regel relativ groß und somit für die Verwendung in einem Fahrzeugsitz nicht geeignet.

Ein gattungsgemässer Fahrzeugsitz ist aus dem Dokument DE10319148B3 bekannt.

Es war daher die Aufgabe der vorliegenden Erfindung einen Fahrzeugsitz mit Belüftungsvorrichtung anzugeben, bei dem die Belüftung des Fondraums ohne Nachteile für den Insassen, der auf dem Fahrzeugsitz sitzt, erfolgt. Insbesondere Ansaugströmungen durch Luft, die zu den Lufteinlassöffnungen des Fahrzeugsitzes gezogen wird, sollen dabei vermieden werden.

Gelöst wird die Aufgabe durch einen Fahrzeugsitz mit den Merkmalen des Anspruchs 1. Der Fahrzeugsitz ist mit einer Rückenlehne und einer Belüftungsvorrichtung ausgestattet, wobei die Belüftungsvorrichtung zur Belüftung eines Fahrzeug-Fondraums vorgesehen ist und mindestens ein Gebläse und eine Luftaustrittsöffnung aufweist. Das Gebläse saugt zur Belüftung des Fondraums Luft aus der Rückenlehne des Fahrzeugsitzes an. In vorteilhafter Weise stört die Ansaugung der Luft keinen Fahrzeuginsassen, so dass auch der Komfort für einen Insassen, der auf dem Fahrzeugsitz mit Belüftungsvorrichtung sitzt, nicht durch die Belüftungsvorrichtung herabgesetzt wird. Da vorteilhafter Weise keine Lufteintrittsöffnungen oder Luftführungskanäle vorhanden sind, ist der Fahrzeugsitz besonders unkompliziert im Aufbau und der Montage. Insbesondere die Herstellungszeit und die anschließende Montagezeit wird durch den erfindungsgemäßen Fahrzeugsitz deutlich reduziert im Vergleich zu anderen Fahrzeugsitzen mit Belüftungsvorrichtungen.

Bevorzugt weist die Rückenlehne des Fahrzeugsitzes ein Material auf, das Luft vorzugsweise über Flächen der Rückenlehne einlässt aber vorzugsweise im wesentlichen die Luft nicht über die Flächen entweichen lässt. In vorteilhafter Weise weist die Rückenlehne des Fahrzeugsitzes so genügend Luft im Inneren auf, die von der Belüftungsvorrichtung zur Belüftung des Fondraums verwendet werden kann. Weiterhin bevorzugt weist der Fahrzeugsitz ein Bezug auf, der einen besonders geringen Strömungswiderstand aufweist, so dass Luft ohne große Widerstände in den Fahrzugsitz eintreten kann. Bevorzugt ist auch das Polstermaterial des Fahrzeugsitzes so gestaltet, dass sich die Luft gut im Polster ausbreiten kann und innerhalb des Polsters mit möglichst geringen Widerstand zur Luftaustrittsöffnung der Belüftungsvorrichtung gelangt. Hierdurch kann vorteilhaft die Saugkraft des Gebläses klein dimensioniert werden, da Wiederstände bei der Luftansaugung vorzugsweise gering sind.

Weiterhin bevorzugt sind die Flächen, welche die Luft aufnehmen, die Rückflächen der Rückenlehne und/oder die Seitenflächen der Rückenlehne. In vorteilhafter Weise nimmt der Fahrzeugsitz somit Luft über große Flächen auf. Da es keine einzelne Lufteintrittsöffnung gibt, über die Luft durch das Gebläse angesaugt wird, entsteht im wesentlichen auch kein fokussierter Luftstrom von Luft, der in die Lufteinlassöffnung einströmt. Ein Insasse der auf dem Fahrzeugsitz mit Belüftungsvorrichtung sitzt, wird folglich nicht durch Luftströme zur Lufteinlassöffnung gestört.

Erfindungsgemäss weist die Rückenlehne die Belüftungsvorrichtung auf. Die Rückenlehne bietet sich zur Aufnahme der Belüftungsvorrichtung besonders vorteilhaft an, da sie in den Fondbereich hineinragt und sich im wesentlichen parallel zum Fondpassagier erstreckt. Die Versorgung eines Fondpassagiers mit Luft wird hierdurch besonders effektiv ermöglicht. Denkbar ist jedoch auch, dass das Sitzteil des Fahrzeugsitzes oder eine Kopfstütze des Fahrzeugsitzes die Belüftungsvorrichtung aufweist.

Bevorzugt weist die Belüftungsvorrichtung mindestens einen ersten Versteller und einen zweiten Versteller zur Beeinflussung des Luftstroms der Belüftungsvorrichtung auf. Durch die Möglichkeit den Luftstrom zu beeinflussen, wird der Komfort für einen Fondpassagier wesentlich erhöht. Erfindungsgemäss ist der erste Versteller und/oder der zweite Versteller von einem Fondpassagier aus zu bedienen. Eine für den Fondpassagier umständliche Bedienführung beispielsweise über die Konsole des Fahrzeuges entfällt somit.

Erfindungsgemäss weist die Belüftungsvorrichtung zwei Verstellflügel auf. Die Verstellflügel befinden sich dabei bevorzugt hinter einem Gitter der Belüftungsvorrichtung, wodurch eine Verletzungsgefahr, beispielsweise durch Einklemmen der Finger zwischen den Verstellflügeln, nicht möglich ist. Insbesondere bei Kindern, die auf der Rücksitzbank sitzen, wird hiermit das Verletzungsrisiko verringert. Weiterhin bevorzugt befinden sich die beiden Verstellflügel im wesentlichen parallel übereinander.

Bevorzugt sind die beiden Verstellflügel manuell oder über einen Motor verstellbar. Natürlich ist auch denkbar, dass nur einer der Verstellflügel über einen Motor verstellbar ist und der andere Verstellflügel manuell verstellbar ist. Insbesondere durch die Verstellung mittels eines Motors ist die Verstellung der Verstellflügel für einen Nutzer besonders komfortabel. Des weiteren können bevorzugte Positionen der Verstellflügel bei der Verstellung mittels eines Motors gespeichert werden. Hierfür würde der Motor eine zusätzliche Memory-Funktion aufweisen.

Erfindungsgemäss wird durch den ersten Versteller die Fokussierung des Luftstroms einstellbar. Hierfür wird der Versteller so bewegt, dass sich die Verstellflügel zueinander annähern. Unter einem fokussierten Luftstrom soll dabei verstanden werden, wenn der Durchmesser des Luftstroms möglichst gering ist. Beispielsweise ist der Luftstrom eines Föhns ohne Diffuser ein fokussierter Luftstrom gegenüber dem Luftstrom eines Föhns mit Diffuser. Unter "annähern" soll dabei verstanden werden, wenn sich beide Verstellflügel mit zumindest Teilbereichen aufeinander zu bewegen oder wenn sich nur ein Verstellflügel mit zumindest einem Teilbereich auf den anderen Verstellflügel zu bewegt. Durch die Verstellung ist es vorteilhaft möglich, einen Fondpassagier sowohl mit einem stark fokussiertem Luftstrom als auch mit einem sehr diffusen Luftstrom zu versorgen. Die Abstufung zwischen stark fokussiert bis zu sehr diffus erfolgt dabei vorteilhaft im wesentlichen stufenlos. Wie bereits erwähnt, kann die Verstellung der Verstellflügel mittels eines Motors bewirkt werden. Folglich wird durch den ersten Versteller in diesem Fall der Motor gesteuert.

Weiterhin bevorzugt ist durch den zweiten Versteller zumindest teilweise die Richtung des Luftstroms beeinflussbar. Hierfür befindet sich der zweite Versteller bevorzugt zwischen den Verstellflügeln und bewegt zumindest einen der Verstellflügel. Selbstverständlich können die Verstellflügel zur Beeinflussung der Richtung des Luftstroms auch über einen Motor verstellt werden. In diesem Fall wirkt der zweite Versteller als Steuerung für den Motor.

Durch die Einstellung der Fokussierung des Luftstroms und die Beeinflussung der Richtung des Luftstroms, kann die Belüftungsvorrichtung auf die Wünsche des Fondpassagiers als Benutzer eingestellt werden. Der Komfort für einen Fondpassagier wird hierdurch deutlich gesteigert. Die Bedienung der Belüftungsvorrichtung zur Einstellung und Beeinflussung des Luftstroms wird dabei durch den ersten und den zweiten Versteller besonders unkompliziert und selbst für Kinder möglich.

Besonders bevorzugt weist der erste Versteller der Belüftungsvorrichtung ein Antriebsmittel auf, mit dem die Verstellflügel bewegbar sind. Das Antriebsmittel befindet sich dabei bevorzugt auf einer Scheibe und ist vorzugsweise etwa S-förmig aufgebaut. Wird die Scheibe manuell oder durch einen Motor bewegt, gelangt das Antriebsmittel in Kontakt mit einem der beiden Verstellflügel, verhakt sich leicht mit einem der Verstellflügel und bewegt so den Verstellflügel, wenn das Antriebsmittel weiter bewegt wird. Durch den S-förmigen Aufbau des Antriebsmittels gelangt an einem ersten Ende der S-Biegung der eine Verstellflügel mit dem Antriebsmittel in Kontakt und mit dem zweiten Ende der S-Biegung der andere Verstellflügel in Kontakt. Bevorzugt wird jedoch bei einem Drehen des Antriebsmittels nur ein Verstellflügel durch das Antriebsmittel bewegt. Hierdurch kann erreicht werden, dass sich ein Verstellflügel dem anderen annähert und die Luftaustrittsöffnung, die durch die beiden Verstellflügel gebildet wird, größer oder kleiner wird. Beim Annähern der beiden Verstellflügel sollen sich dabei bevorzugt nur die zur Blende gewandten Bereiche der Verstellflügel einander annähern. Je näher sich die zur Blende gewandten Bereiche der Verstellflügel einander angenähert haben, um so fokussierter wird der Luftstrom, je weiter sie entfernt sind um so diffuser wird der Luftstrom.

Weiterhin bevorzugt weisen die Verstellflügel der Belüftungsvorrichtung Federmittel auf. Diese Federmittel befindet sich bevorzugt mit dem Gehäuse der Belüftungsvorrichtung in Kontakt. Werden die Verstellflügel mittels des zweiten Verstellers bewegt, so drückt der zweite Versteller bevorzugt nur einen der Verstellflügel nach oben oder unten. Der andere Verstellflügel wird mittels des Federmittels des anderen Verstellflügels bewegt. Bevorzugt ist das Federmittel einstückig mit dem Verstellflügel geformt. Unter "einstückig" soll hierbei verstanden werden, wenn vorzugsweise im wesentlichen kein anderes Material für das Federmittel verwendet wird, als für den Verstellflügel und bevorzugt das Federmittel zusammen mit dem Verstellflügel gefertigt wird. Ein separates Aufbringen oder Anbringen des Federmittels auf oder an den Verstellflügel, beispielsweise durch kleben oder schweißen, entfällt. Hierdurch wird die Herstellung der Verstellflügel unkompliziert und die Robustheit der Verstellflügel erhöht, da fehlerhafte Klebenähte oder Schweißnähte nicht auftreten können.

Besonders bevorzugt weist die Belüftungsvorrichtung das Gebläse in dem Gehäuse der Belüftungsvorrichtung auf. Die Trennung von Gehäuse und Gebläse entfällt, wodurch weniger Platz im Fahrzeugsitz beansprucht wird. Zudem ist so das Gebläse näher an den Luftaustrittsöffnung, wodurch die Belüftung eines Fondpassagiers wirkungsvoller wird.

Die Erfindung wird nachfolgend anhand von Figuren erläutert. Die Figuren und Erläuterungen sind dabei lediglich beispielhaft und schränken den allgemeinen Erfindungsgedanken nicht ein.
- **Figur 1**: zeigt schematisch einen Fahrzeugsitz mit einer Belüftungsvorrichtung.
- **Figur 2**: stellt schematisch eine Explosionsdarstellung der Belüftungsvorrichtung dar.
- **Figur 3**: stellt schematisch die Belüftungsvorrichtung ohne eine Blende dar.
- **Figur 4**: stellt schematisch die Belüftungsvorrichtung mit Blende dar.

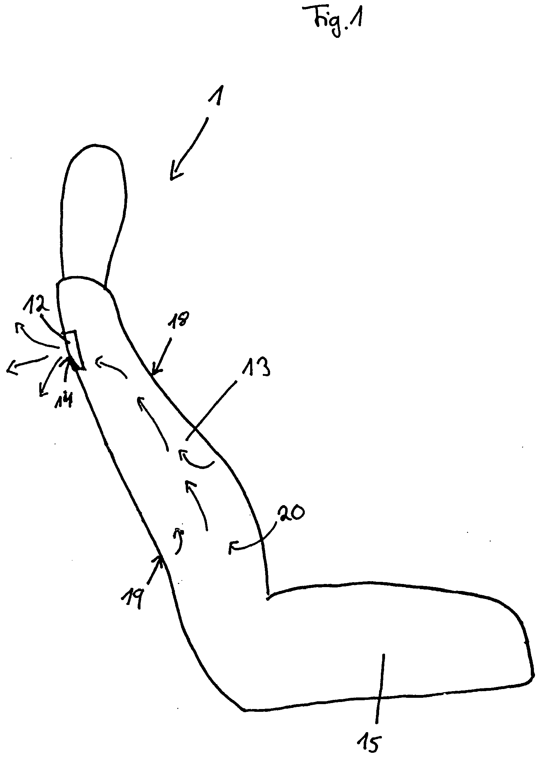

In der Figur 1 ist schematisch ein Fahrzeugsitz 1 dargestellt. Der Fahrzeugsitz 1 weist eine Belüftungsvorrichtung 12 mit einer Luftaustrittsöffnung 14 auf. Durch ein Gebläse 8 (in der Figur 1 nicht dargestellt) der Belüftungsvorrichtung 12 wird Luft beispielsweise von einer Rückfläche 19 und/oder von einer Seitenfläche 20, einer Rückenlehne 13 angesaugt. Denkbar ist jedoch auch, dass die Luft auch über eine Auflagefläche 18 der Rückenlehne 13 und/oder den Flächen eines Sitzteils 15 angesaugt wird. Selbstverständlich kann die Luft in den Fahrzeugsitz 1 auch nur durch eine der genanten Flächen gelangen. Bevorzugt gelangt die Luft zwar über die eben genannten Flächen in den Fahrzeugsitz 1, kann aber über die Flächen nicht im gleichen Maße wieder entweichen. Durch das Gebläse 8 wird die im Fahrzeugsitz 1 befindliche Luft zur Luftaustrittsöffnung 14 befördert, die Luft tritt an dieser Stelle aus der Belüftungsvorrichtung 12 aus und belüftet den Fondbereich eines Fahrzeuges.

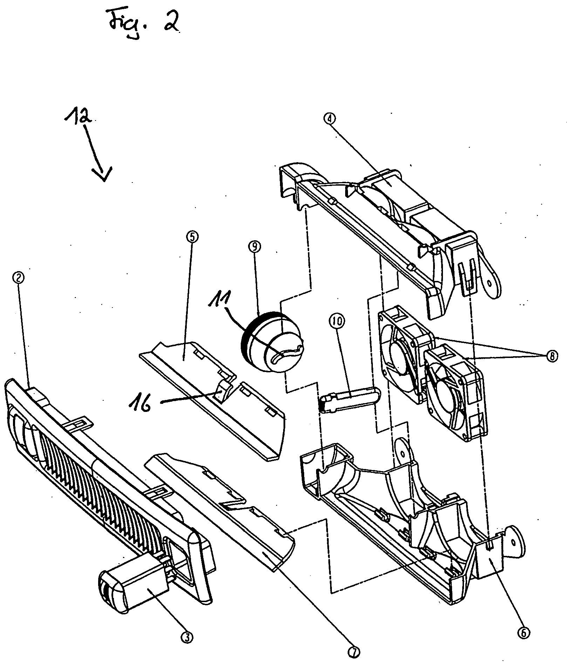

In der Figur 2 ist schematisch eine Explosionsdarstellung der Belüftungsvorrichtung 12 dargestellt. Die Belüftungsvorrichtung 12 umfasst dabei zunächst ein erstes Teil Gehäuse 4 und ein zweites Teil Gehäuse 6, sowie eine Blende 2. Im dem Gehäuse, das durch die eben beschriebenen Teile gebildet wird, befindet sich das Gebläse 8 und ein erster Verstellflügel 5 und ein zweiter Verstellflügel 7. Das Gebläse 8 wird dabei bevorzugt in das zweite Teil des Gehäuses 6 eingesetzt. Der erste Verstellflügel 5 wird mit seiner Längsseite über den zweiten Verstellflügel 7 angeordnet. Zwischen den beiden Verstellflügeln 5, 7 und mittig zum Gehäuse angeordnet, befindet sich der zweite Versteller 10. Im Ausführungsbeispiel im linken Gehäuseabschnitt befindet sich ein erster Versteller 9 mit einem Antriebsmittel 11. Der erste Versteller 9 wird hierbei auch im zweiten Teil des Gehäuses 6 aufgenommen. Die Verstellflügel 5, 7 weisen Federmittel 16 auf, wobei das Federmittel 16 des ersten Verstellflügels 5 nach oben gerichtet ist und gegen das erste Teil des Gehäuses 4 drückt. Das Federmittel 16 des zweiten Verstellflügels 7 weist nach unten und drückt gegen das zweite Teil des Gehäuses 6. Die Blende 2 weist teilweise ein Gitter mit Längsstreben auf. Des weiteren weist die Blende 2 einen Schalter 3 auf, mit dem die Belüftungsvorrichtung 12 ein- bzw. ausgeschaltet werden kann.

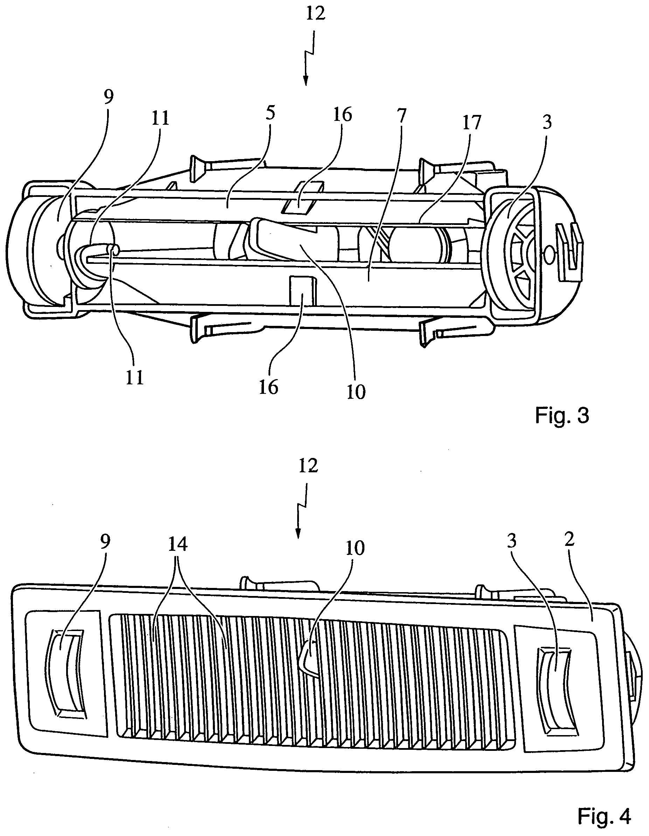

In der Figur 3 ist schematisch die Belüftungsvorrichtung 12 ohne die Blende 2 dargestellt. Die beiden Verstellflügel 5, 7 weisen in diesem Ausführungsbeispiel abgeflachte Bereiche 17 auf, mit denen sie sich einander annähern. Der erste Versteller 9 weist eine Scheibe mit einem Antriebsmittel 11 auf, wobei das Antriebsmittel 11 einen S-förmigen Aufbau besitzt. Im Ausführungsbeispiel ist eine Biegung der S-Form des Antriebsmittels 11 gerade in Kontakt mit dem zweiten Verstellflügel 7. Beim Drehen des ersten Verstellers 9 in Richtung des ersten Verstellflügels 5 wird der zweite Verstellflügel 7 mitgedreht und nähert sich mit dem abgeflachten Bereich 17 dem ersten Verstellflügel 5 an. Die Annäherung wird jedoch durch den zweiten Versteller 10 begrenzt, der zwischen dem ersten Verstellflügel 5 und dem zweiten Verstellflügel 7 platziert ist. Bei einer Betätigung des zweiten Verstellers 10, beispielsweise nach oben in Richtung des ersten Verstellflügels 5, wird das Federmittel 16 des ersten Verstellflügels 5 komprimiert. Der zweite Versteller 10 bewegt sich von dem zweiten Verstellflügel 7 weg, wodurch das Federmittel 16 des zweiten Verstellflügels 7 dekomprimiert wird. Durch diese Dekomprimierung des Federmittels 16 des zweiten Verstellflügels 7 wird der zweite Verstellflügel 7 in Richtung des zweiten Verstellers 10 und des ersten Verstellflügels 5 gedrückt.

In der Figur 4 ist schematisch die Belüftungsvorrichtung 12 mit der Blende 2 dargestellt. Der Schalter 3 ist im Ausführungsbeispiel als Rad ausgebildet. Sowohl der Schalter 3 als auch der erste Versteller 9 und der zweite Versteller 10 sind für einen Benutzer der Belüftungsvorrichtung 12 gut zu erreichen. Die Bedienung der Belüftungsvorrichtung 12 wird daher für einen Benutzer besonders einfach gestaltet. Das Gitter der Blende 2 weist Luftaustrittsöffnungen 14 auf, durch die Luft austreten kann.

### Bezugszeichenliste

- 1: Fahrzeugsitz
- 2: Blende
- 3: Schalter
- 4: erstes Teil Gehäuse
- 5: erster Verstellflügel
- 6: zweites Teil Gehäuse
- 7: zweiter Verstellflügel
- 8: Gebläse
- 9: erste Versteller
- 10: zweiter Versteller
- 11: Antriebsmittel
- 12: Belüftungsvorrichtung
- 13: Rückenlehne
- 14: Luftaustrittsöffnung
- 15: Sitzteil
- 16: Federmittel
- 17: abgeflachter Bereich
- 18: Auflagefläche (Rückenlehne)
- 19: Rückfläche (Rückenlehne)
- 20: Seitenfläche (Rückenlehne)

## Patentansprüche

1. Fahrzeugsitz (1) mit einer Rückenlehne (13) und einer Belüftungsvorrichtung (12), wobei die Belüftungsvorrichtung (12) zur Belüftung eines Fahrzeug-Fondraums vorgesehen ist und mindestens ein Gebläse (8) und eine Luftaustrittsöffnung (14) aufweist, wobei die Luftaustrittsöffnung (14) von zwei verstellbaren Verstellflügeln (5, 7) gebildet wird, wobei zur Belüftung des Fondraums mit einem Luftstrom das Gebläse (8) Luft aus der Rückenlehne (13) ansaugt, wobei die Belüftungsvorrichtung (12) ferner mindestens einen ersten Versteller (9) aufweist, **dadurch gekennzeichnet, dass** der mindestens eine Versteller (9) dazu ausgebildet ist, von einem Fondspassagier bedient zu werden und dadurch zumindest einen Teilbereich der zwei verstellbaren Verstellflügel (5, 7) aufeinander zu oder voneinander weg gerichtet bewegen zu lassen, wobei bei einer Aufeinanderzubewegung der zwei verstellbaren Verstellflügel (5, 7) die Luftaustrittsöffnung (14) verengt und bei einer Voneinanderwegbewegung der zwei verstellbaren Verstellflügel (5, 7) die Luftaustrittsöffnung (14) verbreitert wird.

2. Fahrzeugsitz (1) nach Anspruch 1, **dadurch gekennzeichnet, dass** die Flächen der Rückenlehne (13) eine Rückfläche (19) und/oder eine Seitenfläche (20) sind.

3. Fahrzeugsitz (1) nach einem der vorhergehenden Ansprüche, **dadurch gekennzeichnet, dass** die Belüftungsvorrichtung (12) einen zweiten Versteller (10) zur Beeinflussung eines durch die Luftaustrittsöffnung (14) austretenden Luftstroms aufweist.

4. Fahrzeugsitz (1) nach einem der vorhergehenden Ansprüche **dadurch gekennzeichnet, dass** die Rückenlehne (13) des Fahrzeugsitzes (1) die Belüftungsvorrichtung (12) aufweist.

5. Fahrzeugsitz (1) nach einem der vorhergehenden Ansprüche, **dadurch gekennzeichnet, dass** die Verstellflügel (5, 7) manuell und/oder über einen Motor verstellbar sind.

6. Fahrzeugsitz (1) nach einem der vorhergehenden Ansprüche, **dadurch gekennzeichnet, dass** durch den ersten Versteller (9) der Belüftungsvorrichtung (12) ein unterschiedlicher Grad einer Fokussierung des Luftstroms einstellbar ist.

7. Fahrzeugsitz (1) nach einem der vorhergehenden Ansprüche, **dadurch gekennzeichnet, dass** durch den zweiten Versteller (10) zumindest teilweise die Richtung des Luftstroms beeinflussbar ist.

8. Fahrzeugsitz (1) nach einem der vorhergehenden Ansprüche, **dadurch gekennzeichnet, dass** der erste Versteller (9) der Belüftungsvorrichtung (12) ein Antriebsmittel (11) aufweist, der die Verstellflügel (5, 7) bewegt.

9. Fahrzeugsitz (1) nach einem der vorhergehenden Ansprüche, **dadurch gekennzeichnet, dass** die Verstellflügel (5, 7) der Belüftungsvorrichtung (12) ein Federmittel (16) aufweisen.

10. Fahrzeugsitz (1) nach einem der vorhergehenden Ansprüche, **dadurch gekennzeichnet, dass** die Belüftungsvorrichtung (12) das Gebläse (8) in einem Gehäuse (4, 6) aufweist.

## Claims

1. Vehicle seat (1) with a backrest (13) and a ventilation device (12), wherein the ventilation device (12) is provided for ventilating a rear compartment of a vehicle and has at least one fan (8) and an air outlet opening (14), wherein the air outlet opening (14) is formed by two adjustable adjustment blades (5, 7), wherein, in order to ventilate the rear compartment with an air flow, the fan (8) sucks up air from the backrest (13), wherein the ventilation device (12) furthermore has at least one first adjuster (9), **characterized in that** the at least one adjuster (9) is designed to be operated by a rear passenger and to thereby permit at least a partial region of the two adjustable adjustment blades (5, 7) to move in a direction towards each other or away from each other, wherein, during a movement of the two adjustable adjustment blades (5, 7) towards each other, the air outlet opening (14) is narrowed, and, during a movement of the two adjustable adjustment blades (5, 7) away from each other, the air outlet opening (14) is widened.

2. Vehicle seat (1) according to Claim 1, **characterized in that** the surfaces of the backrest (13) are a rear surface (19) and/or a side surface (20).

3. Vehicle seat (1) according to either of the preceding claims, **characterized in that** the ventilation device (12) has a second adjuster (10) for influencing an air flow emerging through the air outlet opening (14).

4. Vehicle seat (1) according to one of the preceding claims, **characterized in that** the backrest (13) of the vehicle seat (1) has the ventilation device (12).

5. Vehicle seat (1) according to one of the preceding claims, **characterized in that** the adjustment blades (5, 7) are adjustable manually and/or by a motor.

6. Vehicle seat (1) according to one of the preceding claims, **characterized in that** a different degree of focusing of the air flow can be set by the first adjuster (9) of the ventilation device (12).

7. Vehicle seat (1) according to one of the preceding claims, **characterized in that** the direction of the air flow can be at least partially influenced by the second adjuster (10).

8. Vehicle seat (1) according to one of the preceding claims, **characterized in that** the first adjuster (9) of the ventilation device (12) has a driving means (11) which moves the adjustment blades (5, 7).

9. Vehicle seat (1) according to one of the preceding claims, **characterized in that** the adjustment blades (5, 7) of the ventilation device (12) have a spring means (16).

10. Vehicle seat (1) according to one of the preceding claims, **characterized in that** the ventilation device (12) has the fan (8) in a housing (4, 6).

## Revendications

1. Siège de véhicule (1) comprenant un dossier (13) et un dispositif de ventilation (12), le dispositif de ventilation (12) étant prévu pour ventiler la région arrière d'un véhicule et présentant au moins une soufflante (8) et une ouverture de sortie d'air (14), l'ouverture de sortie d'air (14) étant formée par deux volets de réglage réglables (5, 7), la soufflante (8) aspirant de l'air depuis le dossier (13) pour la ventilation de la région arrière avec un flux d'air, le dispositif de ventilation (12) présentant en outre au moins un premier dispositif de réglage (9), **caractérisé en ce que** l'au moins un dispositif de réglage (9) est réalisé de manière à être commandé par un passager arrière et à permettre ainsi le déplacement d'au moins une région partielle des deux volets de réglage réglables (5, 7) l'une vers l'autre ou à l'écart l'une de l'autre, l'ouverture de sortie d'air (14), lors du déplacement l'un vers l'autre des deux volets de réglage réglables (5, 7), étant rétrécie, et lors d'un déplacement d'écartement l'un de l'autre des deux volets de réglage réglables (5, 7), l'ouverture de sortie d'air (14) étant élargie.

2. Siège de véhicule (1) selon la revendication 1, **caractérisé en ce que** les surfaces du dossier (13) sont une surface arrière (19) et/ou une surface latérale (20).

3. Siège de véhicule (1) selon l'une quelconque des revendications précédentes, **caractérisé en ce que** le dispositif de ventilation (12) présente un deuxième dispositif de réglage (10) pour influencer un flux d'air sortant à travers l'ouverture de sortie d'air (14).

4. Siège de véhicule (1) selon l'une quelconque des revendications précédentes, **caractérisé en ce que** le dossier (13) du siège de véhicule (1) présente le dispositif de ventilation (12).

5. Siège de véhicule (1) selon l'une quelconque des revendications précédentes, **caractérisé en ce que** les volets de réglage (5, 7) peuvent être réglés manuellement et/ou par le biais d'un moteur.

6. Siège de véhicule (1) selon l'une quelconque des revendications précédentes, **caractérisé en ce qu'**un degré différent d'une focalisation du flux d'air peut être ajusté par le premier dispositif de réglage (9) du dispositif de ventilation (12).

7. Siège de véhicule (1) selon l'une quelconque des revendications précédentes, **caractérisé en ce que** la direction du flux d'air peut être influencée au moins en partie par le deuxième dispositif de réglage (10).

8. Siège de véhicule (1) selon l'une quelconque des revendications précédentes, **caractérisé en ce que** le premier dispositif de réglage (9) du dispositif de ventilation (12) présente un moyen d'entraînement (11) qui déplace les volets de réglage (5, 7).

9. Siège de véhicule (1) selon l'une quelconque des revendications précédentes, **caractérisé en ce que** les volets de réglage (5, 7) du dispositif de ventilation (12) présentent un moyen de ressort (16).

10. Siège de véhicule (1) selon l'une quelconque des revendications précédentes, **caractérisé en ce que** le dispositif de ventilation (12) présente la soufflante (8) dans un boîtier (4, 6).
